# EUROPEAN PATENT APPLICATION

(11) **EP 3 447 320 A1**
(43) Date of publication of application: **27.02.2019**
(21) Application number: 17785904.8
(22) Date of filing: 14.04.2017
(51) Int. Cl.: F16C 33/78, F16C 19/18, F16C 33/80, F16J 15/3204, F16J 15/447

(54) **SEALING STRUCTURE**

(30) Priority: 20.04.2016 JP 2016084609
(71) Applicant: NOK Corporation, Tokyo 105-8585 (JP)
(72) Inventor: SAZA, Takaharu, Fukushima-shi Fukushima 960-1193 (JP)
(74) Representative: TBK
(86) International application number: PCT/JP2017/015228
(87) International publication number: WO 2017/183566

(57) **Abstract**

A sealing structure having a sealed space (S) formed by a first seal member (400) and a second seal member (600). The first seal member (400) includes a first seal lip (421) extending toward the sealed space (S), and is slidably in contact with the hub (100). The second seal member (600) includes a second seal lip (622) extending opposite to the sealed space (S), and is slidably in contact with an inner ring (200). An increase in air pressure inside the sealed space (S) can be suppressed.

## Description

### [Technical Field]

The present invention relates to a sealing structure in which a sealed space is formed in an annular gap between two members.

### [Background Art]

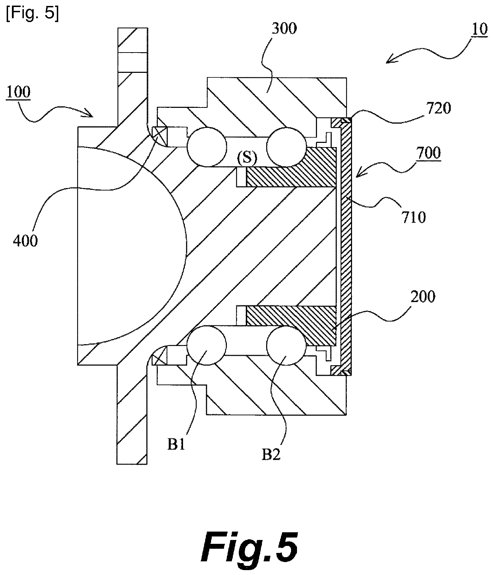

A hub bearing of a car has a sealed space formed by two seal members, one being disposed near to an exterior of the car and the other being disposed near to an interior of the car. In an intervening region between the seal members, a plurality of rolling members, such as balls, are provided. For such a seal member, a rotating seal having a seal lip which is slidable on an inner ring of the hub bearing or the like is normally used. Recently a bore plug is considered to be adopted as the seal member disposed near to the interior of a car in order to reduce the sliding torque. A sealing structure using such a bore plug according to a prior art will be described with reference to Fig. 5. Fig. 5 is a schematic cross-sectional view of a hub bearing having the sealing structure according to the prior art.

The hub bearing 10 includes a hub 100, an inner ring 200 that is fixed to the hub 100, an outer ring 300 disposed concentrically with the inner ring 200, and a plurality of balls B1 and B2 which are disposed between the hub 100 and the outer ring 300 and between the inner ring 200 and the outer ring 300 respectively. The outer ring 300 is installed in a car body, and a wheel is installed in the hub 100. A first seal member 400 is disposed nearer to an exterior of the car in relation to a region where a plurality of balls B1 and B2 are disposed, and a second seal member 700 is disposed nearer to an interior of the car in relation to the region. A sealed space (S) is formed between the first seal member 400 and the second seal member 700.

In the prior art, a bore plug is used as the second seal member 700. The second seal member 700 is constituted of a cover main body 710 made of metal, and an annular outer periphery seal 720 made of a rubbery elastic member disposed on the outer peripheral surface of the cover main body 710. The second seal member 700 has no portion to slide on the hub 100 and the inner ring 200, hence the second seal member 700 does not generate a sliding torque. The outer periphery seal 720 can improve the sealing performance of the second seal member 700.

The bore plug used in the prior art as the second seal member 700 may affect the first seal member 400. This aspect will be described in detail. The second seal member 700 is fixed to the outer ring 300 by fitting after the plurality of balls B1 and B2, the first seal member 400 and the like are installed. As mentioned above, the air tightness of the second seal member 700 is high, hence the air inside the sealed space (S) does not leak outside during a process of fitting the second seal member 700 to the outer ring 300, and then the air pressure inside the sealed space (S) becomes high. Although not illustrated in Fig. 5, the first seal member 400 has a seal lip extending toward the sealed space (S) and configured to slide on the outer peripheral surface of the hub 100. If the air pressure inside the sealed space (S) becomes high, as mentioned above, the seal lip is pressed against the outer peripheral surface of the hub 100 with a strong force. Thereby the sliding torque caused by the first seal member 400 increases, and the sliding abrasion of the seal lip of the first seal member 400 may be accelerated.

### [Citation List]

### [Patent Literature]

[PTL 1]
   Japanese Patent Application Publication No. 2014-219100
[PTL 2]
   Japanese Patent Application Publication No. 2005-265826

### [Summary of Invention]

### [Technical Problem]

One or more aspects of the present invention are directed to provide a sealing structure which can prevent the air pressure inside the sealed space from becoming high.

### [Solution to Problem]

In response to the above issue, the present invention uses the following means.

A sealing structure of the present invention has: an outer member; an inner member that rotates with respect to the outer member; a plurality of rotating members disposed in a region between the outer member and the inner member rotatable between the outer member and the inner member; a first seal member disposed on one side of the region in which the plurality of rotating members are disposed, the first seal member being configured to seal an annular gap between the outer member and the inner member; and a second seal member disposed on the other side of the region in which the plurality of rotating members are disposed, the second seal member being configured to seal the annular gap between the outer member and the inner member. The first seal member and the second seal member form a sealed space. The first seal member includes a first seal lip extending toward the sealed space and slidably in contact with the inner member, and the second seal member includes a second seal lip extending opposite to the sealed space and slidably in contact with the inner member.

According to the present invention, the second seal lip of the second seal member extends toward the opposite side to the sealed space, and is slidably in contact with the inner member. The second seal lip can deform to bend away from the inner member when the air pressure inside the sealed space becomes high. This allows the air in the sealed space to be released, thus the air pressure inside the sealed space can be lowered.

The second seal member may include: a metal ring including a cylindrical portion fitted in an inner peripheral surface of the outer member, and an inward flange disposed on an edge of the cylindrical portion on the other side; and a seal main body made of a rubbery elastic member and integrated with the metal ring. The seal main body may include: an outer periphery seal that is in contact with the inner peripheral surface of the outer member; and the second seal lip.

The outer periphery seal of the second seal member made of a rubbery elastic member can increase air tightness between the second seal member and the outer member.

The sealing structure may further include an annular member including an outward flange disposed to face the inward flange of the metal ring, wherein, between the annular member and the second seal member, a labyrinth seal is formed.

This configuration prevents entry of foreign substances from the second seal member side to the sealed space side.

The outer member may be an outer ring, the inner member may include a hub and an inner ring fixed to the hub, and the second seal lip may be slidably in contact with an end face of the inner ring.

The outer member may be an outer ring, the inner member may include: a hub; an inner ring fixed to the hub; and a rotating member fixed to an end of the inner ring and of which diameter is smaller than the outer diameter of the inner ring, and the second seal lip is slidably in contact with an outer peripheral surface of the rotating member.

These configurations make the diameter of a sliding area where the second seal lip slides smaller, thus the sliding torque caused by the second seal member can be decreased.

### [Advantageous Effects of Invention]

As described above, according to the present invention, an excessive increase of the air pressure in the sealed space can be prevented.

### [Brief Description of Drawings]

Fig. 1 is a schematic cross-sectional view of a hub bearing having a sealing structure according to Example 1.
Fig. 2 is an enlarged cross-sectional view of a part of the sealing structure according to Example 1.
Fig. 3 is an enlarged cross-sectional view of a part of the sealing structure according to Example 1.
Fig. 4 is an enlarged cross-sectional view of a part of the sealing structure according to Example 2.
Fig. 5 is a schematic cross-sectional view of a hub bearing having a sealing structure according to a prior art.

### [Description of Embodiments]

Embodiments of the present invention will be described with reference to the drawings using examples. The dimensions, materials, shapes and relative positions of the components described in the examples are not intended to limit the scope of the inventions, unless otherwise specified.

### (Example 1)

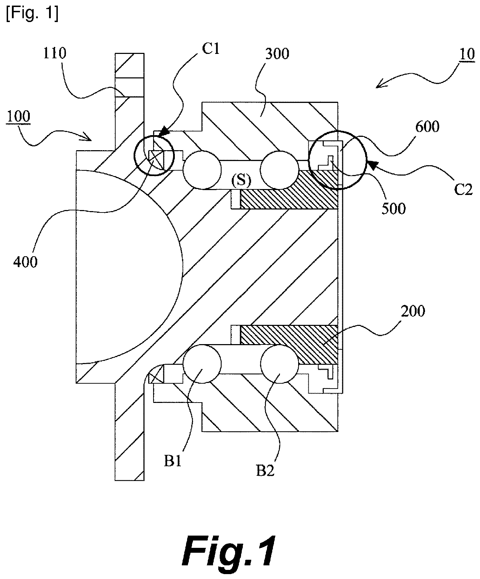

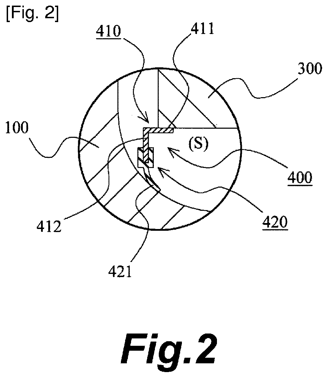

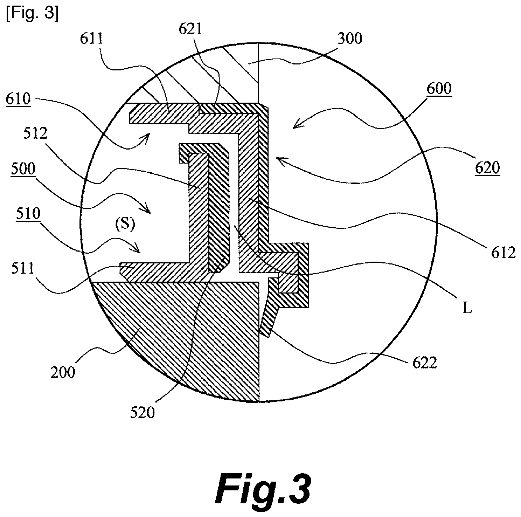

A sealing structure according to Example 1 of the present invention will be described with reference to Figs. 1 to 3. Fig. 1 is a schematic cross-sectional view depicting a hub bearing which includes the sealing structure according to Example 1 of the present invention. In Fig. 1, each component is illustrated in a simplified manner. Fig. 2 is an enlarged cross-sectional view of a part, which is indicated by the circle C1 in Fig. 1, of the sealing structure according to Example 1 of the present invention. Fig. 3 is an enlarged cross-sectional view of a part, which is indicated by the circle C2 in Fig. 1, of the sealing structure according to Example 1 of the present invention.

### <Hub bearing>

A general configuration of the hub bearing which includes the sealing structure according to Example 1 will be described with reference to Fig. 1.

The hub bearing 10 includes: a hub 100; an inner ring 200 fixed to the hub 100; and an outer ring 300 disposed concentrically with the inner ring 200. The hub bearing 10 also includes a plurality of balls B1 which are rotating members disposed between the hub 100 and the outer ring 300, so as to be rotated between the hub 100 and the outer ring 300. Further, the hub bearing 10 includes a plurality of balls B2 which are rotating members disposed between the inner ring 200 and the outer ring 300, so as to be rotated between the inner ring 200 and the outer ring 300. The outer ring 300 in Example 1 corresponds to the outer member, and the hub 100 and the inner ring 200 correspond to the inner member which rotates with respect to the outer member.

The outer ring 300 is installed in a car body, and a wheel is installed in the hub 100. The hub 100 has a hole 110, and the wheel is installed by a hub bolt using the hole 110. A first seal member 400 is disposed nearer to an exterior of the car in relation to a region where the plurality of balls B1 and B2 are disposed. In other words, the first seal member 400 is disposed on one side of the region. The first seal member 400 seals an annular gap between the outer ring 300 and the hub 100. Further, a second seal member 600 is disposed nearer to an interior of the car in relation to the region where the plurality of balls B1 and B2 are disposed. In other words, the second seal member 600 is disposed on the other side of the region. The second seal member 600 seals an annular gap between the outer ring 300 and the inner ring 200. Hence a sealed space (S) is formed between the first seal member 400 and the second seal member 600 disposed on both sides of the region where the plurality of balls B1 and B2 as rotating members are disposed. A side nearer to the exterior of the car will be hereinafter called "exterior side", and a side nearer to the interior of the car will be hereinafter called "interior side".

### <First seal member>

The first seal member 400 will be described in more detail with reference to, in particular, Fig. 2. The first seal member 400 includes a metal ring 410 and a seal main body 420 made of a rubbery elastic member integrated with the metal ring 410. The metal ring 410 includes a cylindrical portion 411 fitted into the inner peripheral surface of the outer ring 300 and an inward flange 412 disposed on the exterior side of the cylindrical portion 411. The seal main body 420 includes a first seal lip 421 which extends from an area around the end of the inward flange 412 toward the sealed space (S), and is slidably in contact with the outer peripheral surface of the hub 100. The first seal lip 421 configured as above keeps slidably in contact with the outer peripheral surface of the hub 100 when the hub 100 is rotating with respect to the outer ring 300, and thus the air tightness is ensured.

### <Second seal member>

The second seal member 600 will be described in more detail with reference to, in particular, Fig. 3. The second seal member 600 includes a metal ring 610 and a seal main body 620 made of a rubbery elastic member integrated with the metal ring 610. The metal ring 610 includes a cylindrical portion 611 fitted into the inner peripheral surface of the outer ring 300 and an inward flange 612 disposed on the interior side edge of the cylindrical portion 611. The seal main body 620 includes an outer periphery seal 621 being in contact with the inner peripheral surface of the outer ring 300 and a second seal lip 622. The second seal lip 622 extends opposite to the sealed space (S) and is slidably in contact with the end face of the inner ring 200. The second seal lip 622 configured as above keeps slidably in contact with the end face of the inner ring 200 when the inner ring 200 is rotating with respect to the outer ring 300, and thus the air tightness is ensured.

The sealing structure according to Example 1 includes an annular member 500 installed in the inner ring 200. The annular member 500 includes a metal ring 510 and a magnetic encoder 520 integrated with the metal ring 510. The metal ring 510 includes a cylindrical portion 511 fitted into the inner ring 200 and an outward flange 512 disposed on the interior side edge of the cylindrical portion 511. The outward flange 512 is disposed to face the inward flange 612 of the metal ring 610 of the second seal member 600. The magnetic encoder 520 is disposed to cover the interior side surface of the outward flange 512 of the annular member 500. The magnetic encoder 520 includes rubber magnets or the like, of which S pole and N pole are alternately disposed in the circumferential direction. The details of the magnetic encoder 520 are omitted since this is a known technology. The rotation speed of the inner ring 200 can be detected by using the magnetic encoder 520 and a sensor for detecting the rotation speed (not illustrated) which has a function to detect the change of magnetic field.

The annular member 500 and the second seal member 600 form a complex space therebetween, thus a so-called labyrinth seal L is formed in the sealing structure in Example 1 as described above.

### <Advantages of sealing structure of Example 1>

The second seal lip 622 in the sealing structure of Example 1 disposed in the second seal member 600 extends opposite to the sealed space (S), and is slidably in contact with the inner ring 200. The second seal lip 622 deforms to bend away from the inner ring 200 when the air pressure inside the sealed space (S) becomes high. This allows the air in the sealed space (S) to be released, thus the air pressure inside the sealed space (S) can be lowered. Hence the first seal lip 421 of the seal main body 420 of the first seal member 400 is prevented from being strongly pressed against the outer peripheral surface of the hub 100 by the air pressure inside the sealed space (S). Thereby the increase of the sliding torque caused by the first seal member 400 can be suppressed, and acceleration of the sliding aberration of the first seal lip 421 can be prevented.

The second seal lip 622 is slidably in contact with the end face of the inner ring 200 in Example 1. This makes the diameter of the sliding portion where the second seal lip 622 slides small, thus the sliding torque caused by the second seal member 600 can be decreased.

The outer periphery seal 621 made of a rubbery elastic member is disposed in the second seal member 600 in Example 1, hence the air tightness between the second seal member 600 and the outer ring 300 can be increased. The labyrinth seal L is formed between the annular member 500 and the second seal member 600 in Example 1, hence the entry of foreign substances from the second seal member 600 side to the sealed space (S) side can be prevented.

### (Example 2)

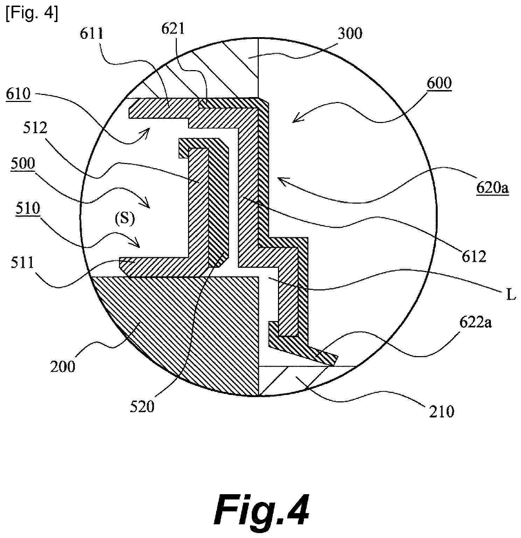

Fig. 4 illustrates Example 2 of the present invention. While the second seal lip of the second seal member is slidably in contact with the end face of the inner ring in Example 1, in Example 2, the second seal lip of the second seal member is slidably in contact with the outer peripheral surface of a rotating member fixed to the end of the inner ring. The rest of the configuration and functions are the same as Example 1, hence a same element as Example 1 is denoted with the same reference sign, and description thereof is omitted.

Fig. 4 is an enlarged cross-sectional view of a part of the sealing structure according to Example 2 of the present invention. Fig. 4 corresponds to an enlarged cross-sectional view of a part indicated by the circle C2 in Fig. 1. A difference between Example 1 and Example 2 is that the rotating member is fixed to the end of the inner ring 200 in Example 2.

The general configuration which includes the sealing structure according to Example 2 is as described in Example 1, hence description thereof is omitted. However, in Example 2, a rotating member 210, of which diameter is smaller than the outer diameter of the inner ring 200, is fixed to the end of the inner ring 200. The rotating member 210 is configured to rotate together with the inner ring 200. One example of the rotating member 210 is a constant velocity joint. The first seal member 400 and the annular member 500 are as described in Example 1, hence description thereof is omitted. The outer ring 300 in Example 1 corresponds to the outer member, and the hub 100, the inner ring 200 and the rotating member 210 correspond to the inner member which rotates with respect to the outer member.

The differences between the sealing structure in Example 2 and that in Example 1 are that the rotating member 210 is disposed on the end of the inner ring 200 and the configuration of the second seal member 600 differs from that of the second seal member 600 in Example 1.

The second seal member 600 in Example 2 includes a metal ring 610 and a seal main body 620a made of a rubbery elastic member integrated with the metal ring 610. The metal ring 610 includes a cylindrical portion 611 fitted into the inner peripheral surface of the outer ring 300 and an inward flange 612 disposed on the interior side edge of the cylindrical portion 611. The seal main body 620a includes an outer periphery seal 621 being in contact with the inner peripheral surface of the outer ring 300 and a second seal lip 622a. The second seal lip 622a extends opposite to the sealed space (S), and is slidably in contact with the outer peripheral surface of the rotating member 210. The second seal lip 622a configured as above keeps slidably in contact with the outer peripheral surface of the rotating member 210 when the inner ring 200 and the rotating member 210 are rotating with respect to the outer ring 300, and thus the air tightness is ensured.

The sealing structure of Example 2 configured as described above can achieve the same effect as Example 1. Further, the annular member 500 and the second seal member 600 in Example 2 form an even more complex space therebetween as compared to Example 1. This forms a labyrinth seal L to prevent the entry of foreign substances from the second seal member 600 side to the sealed space (S) side.

### [Reference Signs List]

- 10: Hub bearing
- 100: Hub
- 110: Hole
- 200: Inner ring
- 210: Rotating member
- 300: Outer ring
- 400: First seal member
- 410: Metal ring
- 411: Cylindrical portion
- 412: Inward flange
- 420: Seal main body
- 421: First seal lip
- 500: Annular member
- 510: Metal ring
- 511: Cylindrical portion
- 512: Outward flange
- 520: Magnetic encoder
- 600: Second seal member
- 610: Metal ring
- 611: Cylindrical portion
- 612: Inward flange
- 620, 620a: Seal main body
- 621: Outer periphery seal
- 622, 622a: Second seal lip
- B1, B2: Ball
- L: Labyrinth seal

## Claims

1. A sealing structure, comprising:
an outer member;
an inner member that rotates with respect to the outer member;
a plurality of rotating members disposed in a region between the outer member and the inner member rotatable between the outer member and the inner member;
a first seal member disposed on one side of the region in which the plurality of rotating members are disposed, the first seal member being configured to seal an annular gap between the outer member and the inner member; and
a second seal member disposed on the other side of the region in which the plurality of rotating members are disposed, the second seal member being configured to seal the annular gap between the outer member and the inner member,
the first seal member and the second seal member forming a sealed space, wherein
the first seal member includes a first seal lip extending toward the sealed space and slidably in contact with the inner member, and
the second seal member includes a second seal lip extending opposite to the sealed space and slidably in contact with the inner member.

2. The sealing structure according to Claim 1, wherein
the second seal member comprises:
a metal ring including a cylindrical portion fitted in an inner peripheral surface of the outer member and an inward flange disposed on an edge of the cylindrical portion on the other side; and
a seal main body made of a rubbery elastic member and integrated with the metal ring, wherein
the seal main body includes:
an outer periphery seal that is in contact with the inner peripheral surface of the outer member; and
the second seal lip.

3. The sealing structure according to Claim 2, further comprising an annular member including an outward flange disposed to face the inward flange of the metal ring, wherein, between the annular member and the second seal member, a labyrinth seal is formed.

4. The sealing structure according to any one of Claims 1, 2 and 3, wherein
the outer member is an outer ring,
the inner member includes a hub and an inner ring fixed to the hub, and
the second seal lip is slidably in contact with an end face of the inner ring.

5. The sealing structure according to any one of Claims 1, 2 and 3, wherein
the outer member is an outer ring,
the inner member includes: a hub; an inner ring fixed to the hub; and a rotating member fixed to an end of the inner ring and of which diameter is smaller than the outer diameter of the inner ring, and
the second seal lip is slidably in contact with an outer peripheral surface of the rotating member.
